# EUROPEAN PATENT SPECIFICATION

(11) **EP 4 107 308 B1**
(45) Date of publication and mention of the grant of the patent: **30.08.2023**
(21) Application number: 21712213.4
(22) Date of filing: 19.02.2021
(51) Int. Cl.: C25B 13/02, C25B 13/08, C25B 1/04, C25B 1/044, C25B 9/17, C25B 9/73

(54) **AN ELECTROLYTIC CELL**
ELEKTROLYTISCHE ZELLE
CELLULE ÉLECTROLYTIQUE

(30) Priority: 21.02.2020 IT 202000003650
(43) Date of publication of application: 28.12.2022
(73) Proprietor: Acca Industries Srl, 20123 Milano (IT)
(72) Inventor: HUMMER, Andreas, 20122 Milano (IT); MASOTTI, Aldo, 20122 Milano (IT)
(74) Representative: Lissandrini, Marco
(86) International application number: PCT/IB2021/051420
(87) International publication number: WO 2021/165901

(56) References cited:
- WO-A1-2019/132684
- WO-A2-01/82391
- CN-U- 201 981 263
- US-A1- 2013 105 307

## Description

### FIELD OF APPLICATION

The present invention relates to an electrolytic cell for the electrolysis of water using an electrolyte.

In particular, the electrolytic cell is configured to produce gaseous oxygen and gaseous hydrogen to be stored or usable for direct combustion in endothermic engines or heat generating machines in general or machines using heat.

The present invention is advantageously applied in the production of hydrogen and oxygen gas, from electrolysis processes usable in endothermic engines.

### PRIOR ART

Currently, it is known to produce gaseous hydrogen and/or oxygen using techniques other than electrolysis because the technology exploiting renewable sources makes the electrolytic methods more expensive.

Water is naturally a non-flammable, stable and safe compound, while gaseous hydrogen and oxygen are unstable, highly reactive and, when combined, potentially explosive under certain conditions.

Consequently, hydrogen must be used in vehicle applications with great care and a precise design of the production and exploitation equipment. For example, the hydrogen and oxygen produced and conveyed in an endothermic engine must flow through the shortest possible path and at a pressure not exceeding about 3 atmospheres to avoid unexpected detonations.

Generally, the electrolytic cells used for the production of gaseous hydrogen and oxygen comprise a water tank in which positive and negative electrodes connected to the ends of a DC power supply capable of providing at least a voltage of 12 or 24 Volts, preferably greater than 50 or 60 V, are inserted so that bubbles of gaseous hydrogen develop at the negative electrode, or cathode, and bubbles of gaseous oxygen develop at the positive electrode, or anode. Documents CN201981263U,
US2013/105307A1, WO2019/132684A1 and WO01/82391A2 disclose some examples of electrolytic cells according to the prior art.

However, a first problem of these electrolytic cells concerns the fact that their production is mostly artisan and designed for manual assembly. This also means that such machines, which are very simple in themselves, are expensive and complex in design.

In addition, in the field of vehicle applications, a further problem of the current electrolytic cells depends on the fact that they are designed so that the entire electric voltage of the vehicle (usually 14 Volts DC) is applied to one or more cells immersed in an open electrolytic bath, each of which comprises a single anode thereof and a single cathode thereof.

Consequently, most of the energy consumed by such an electrolytic cell is converted into heat, to the detriment of the production of gases useful for the combustion of the engine.

A further problem is the lack of compactness (both in terms of width and height) which makes it difficult, if not impossible, to install an electrolytic cell system inside the engine compartments of current vehicles, which are already heavily crowded and packed.

For example, many light trucks have auxiliary battery trays so that two standard sized batteries can be installed inside the engine compartment. However, most vehicles produced in the last twenty years have been designed for low-profile terminal batteries. The use of the space normally allocated for an auxiliary battery for the installation of an electrolyser system has design difficulties if adequate hydrogen generation capacity is to be maintained.

Finally, a further problem of the current electrolytic cells is in relation to their design and construction complexity which increases their production costs and simultaneously reduces their reliability. Generally, because of such costs, the electrolytic cells are used in the medical and research fields.

With reference to the field of the storage of gases obtained by hydrolysis of water, mainly gaseous hydrogen, it is currently known to use hydrides, which are also expensive components and which require at least one further refining step to obtain the gaseous hydrogen to be used.

### DESCRIPTION OF THE INVENTION

The present invention aims to provide an electrolytic cell, for the generation of gases which can be stored or immediately usable for direct combustion in endothermic engines, thus creating a condition which is capable of eliminating or at least reducing the drawbacks highlighted above.

According to a possible embodiment, the technology used by the electrolytic cell according to the invention uses a hydrogen and oxygen generator comprising one or more modules disposed in series, semiinsulated, in each of which an electrolyte mixture is introduced from which an amount of gaseous hydrogen and gaseous oxygen (commonly called hydrogen gas) is obtainable. Preferably, such an electrolytic cell or electrolyser is placed in the intake manifold of the internal combustion engine.

The new mounting system according to the invention eliminates the problem of poor efficiency of the known devices, being able to calibrate the production of the cell on the individual vehicle type both according to the electrical power and the dimensions.

The dimensions of the electrolytic cell according to the invention are compatible with those of a truck battery.

The dependent claims of the present solution outline advantageous embodiments of the invention. The main advantages of this solution concern the following aspects:
- lighter weight;
- smaller size;
- lower consumption;
- less assembly components;
- less need for installation parts;
- flexibility in implementing the quantity produced;
- dimensions compatible with those of a truck battery;
- stackable;
- electrically configurable in a very wide range of voltages and frequencies;
- possible operation even in the absence of gravity.

### ILLUSTRATION OF THE DRAWINGS

Further features and advantages of the invention will become apparent from reading the following description of an embodiment of the invention provided by way of non-limiting example, with the aid of the drawings illustrated in the appended tables of drawings, in which:
- figure 1 is an exploded schematic view of the components of an electrolytic cell comprising a single module and according to a first configuration which allows the delivery of separate hydrogen and oxygen gases;
- figure 2 is an exploded schematic view of the components of an electrolytic cell comprising a single module and according to a second configuration allowing the delivery of joined hydrogen and oxygen gases;
- figure 3 is a side view of an electrolytic cell in the first configuration and comprising two modules in which the components are in a packed condition;
- figure 4 is a perspective view of the electrolytic cell in the first configuration illustrated in figure 3;
- figure 5 is an exploded view of the cell illustrated in figure 4;
- figure 6 is a side view of an electrolytic cell in the first configuration and comprising two modules in which the components are in a packed condition;
- figure 7 is a perspective view of the electrolytic cell in the second configuration illustrated in figure 6;
- figure 8 is a side view of an electrolytic cell in the second configuration and comprising two modules in which the components are in a packed condition.

### DESCRIPTION OF AN EMBODIMENT OF THE INVENTION

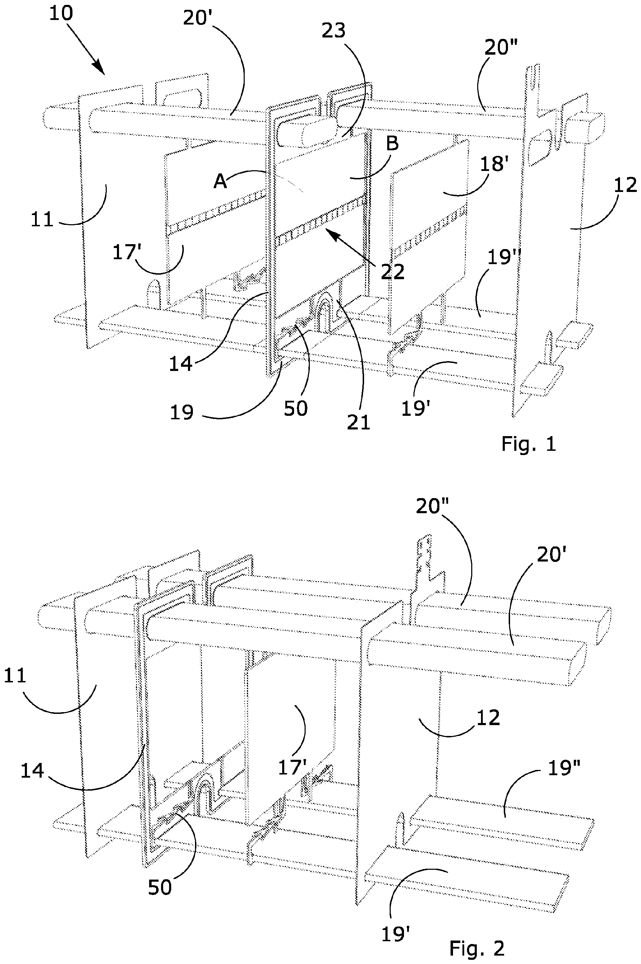

Referring to the attached figures, and initially in particular to figures 1 and 2, the number 10 generally refers to an electrolytic cell, or electrolyser, adapted to generate a suitable gaseous mixture, preferably H₂ gas and O₂ gas separated from each other, to a supply system of an internal combustion engine which, if burned with fuel, improves the efficiency thereof.

Figures 1 and 2 illustrate an electrolytic cell 10 which comprises two laminar plates, a first lamina 11 and a second lamina 12, connected to an electrical source having anode and cathode as a function of the difference in potential established therebetween.

In particular, figure 1 illustrates a first embodiment of the electrolytic cell 10 configured to separately produce gaseous oxygen and gaseous hydrogen, which are collected outside the electrolytic cell 10 for their storage and, therefore, subsequent use.

Figure 2, on the other hand, illustrates a second embodiment of the invention in which the electrolytic cell 10 is configured to produce gaseous oxygen and gaseous hydrogen in the same environment, at a stoichiometric ratio equal to 1:1, so that they can be withdrawn and directly made to flow to an engine for use during the combustion of the fuel normally used.

Advantageously, in fact, the addition of minimal amounts of gaseous hydrogen and oxygen during the combustion of the fuel is capable of improving the same combustion and, at the same time, reducing the production of polluting by-products.

For the purposes of the present description, the first lamina 11 is configured to act as a positive pole, or anode, while the second lamina 12 is adapted to act as a negative pole, or cathode. Such an arrangement is only exemplary and, therefore, the polarities can be indifferently reversed from one another depending on needs.

A third lamina 14 made of dielectric material is interposed between the first and the second lamina 11, 12. Said third lamina is configured to convey a flow of electrolyte from a lower portion 21 thereof to an upper portion 23 thereof. In addition, the third lamina 14 has a first surface A facing towards the first lamina 11 and a second surface B facing towards the second lamina 12.

The third lamina 14 is disposed in fluid connection with at least one inlet conduit 19' of an electrolyte disposed at the lower portion 21, at least one outlet conduit of an electrolyte 19" disposed at the lower portion 21, and at least one extraction conduit 20' of a gas obtained by electrolysis disposed at the upper portion 23.

The electrolytic cell 10 comprises at least one non-return valve 50 disposed at the lower portion 21 of the third lamina 14 along the inlet conduit 19'. Such a non-return valve 50 is configured to convey the flow of electrolyte unidirectionally along the inlet conduit 19' towards a central portion 22 of the third lamina 14 which is between the lower portion 21 and the upper portion 23. The inlet conduit 19' of an electrolyte, the outlet conduit 19" of an electrolyte and the central portion 22 of the third lamina 14 define a flow path along which the electrolyte is capable of flowing through the electrolytic cell 10 so as to allow the production of gaseous hydrogen and oxygen. Preferably, the flow path is devoid of corners and/or acute angles.

According to the invention, the laminar plates 11 and 12 are made of metal material and have electrical conductivity, in order to be able to be connected to positive and negative poles of electric power sources.

Preferably, the first and the second lamina 11, 12 are made of stainless steel so as to resist the applied electrical voltages without degrading. Furthermore, being in constant contact with water and under tension, the use of stainless steel prevents the formation of corrosions and rust which can alter the electrolyte.

According to another aspect of the invention, the third lamina 14 is a plate of predefined dimensions, preferably similar to those of the first and the second lamina 11, 12, and is made of a plastic or polymeric material, preferably nylon.

Thereby, the third lamina 14 is advantageously configured to electrically isolate the first lamina 11 from the second lamina 12. In addition, the creation of the third lamina 14 in dielectric material allows the hydrogen and oxygen ions produced by electrolysis to not react electrically with its surface of the same lamina 14 and converge towards the gas extraction conduit 20' in fluid communication with the upper portion 23 of the third lamina 14.

According to one aspect of the invention, the third lamina 14 has at least one housing fashioned on the first surface A and/or on the second surface B at the central portion 22.

According to another aspect of the invention, the non-return valve 50 is fashioned directly on the first surface A and/or on the second surface B below and in fluid connection with said housing.

It should be noted that from a graphical point of view, in figures 1 and 2, the elements 17' and 18' represent the path of the electrolyte, i.e. water, through the third lamina 14 and the non-return valve 50.

In accordance with the first embodiment of the invention illustrated in figures 1, 3, 4, 5, the third lamina 14 has at least a first housing 17 fashioned on the first surface A and at least a second housing 18 fashioned on the second surface B. In particular, each housing 17, 18 is made at the central portion.

Preferably, a first housing 17 is disposed in fluid connection with a respective first non-return valve 50, while a second housing 18 is disposed in fluid connection with a respective second non-return valve 51.

In particular, the first embodiment includes that the first housing 17 and the second housing 18 are separated by a gap made of a dielectric material.

In other words, according to the first embodiment of the invention, each pair of laminar plates 11 and 12 is separated by a blind plastic gasket 14 which allows the production of physically separated H₂ and O₂ gases capable of being extracted in separate gas extraction conduits 20', which are in connection with respective and different gas storage organs, such as cylinders.

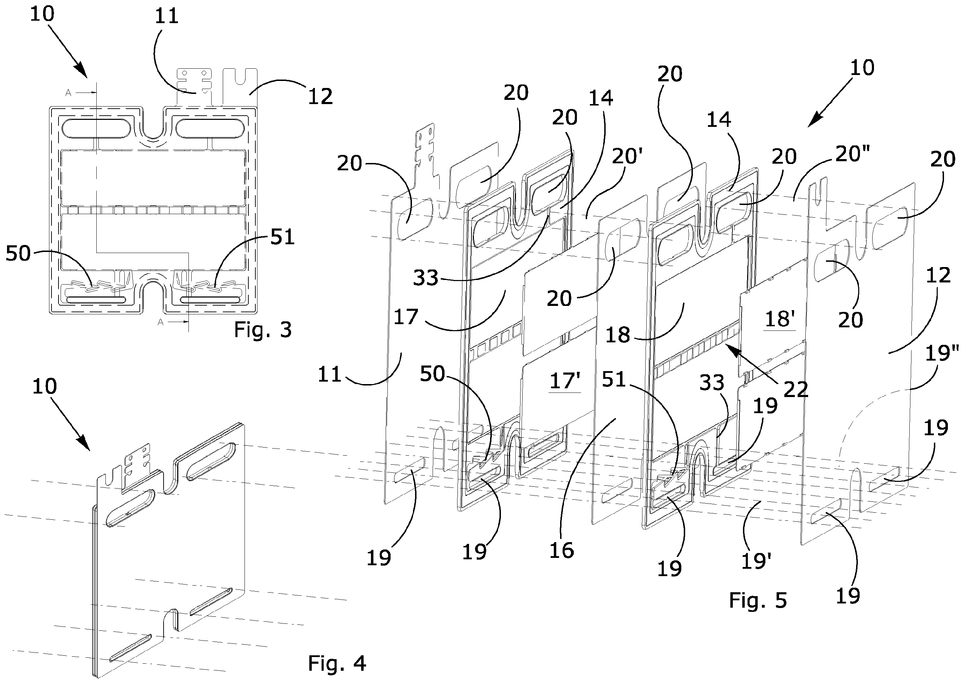

With reference to figure 5, each gas extraction conduit is disposed in fluid connection to a respective housing 17, 18 by means of a respective extraction orifice 20.

On the contrary, the liquid electrolyte tends to return by gravity to the lower portion 21 of the third lamina 14. As the electrolyte is unable to cross the non-return valve 50 in a direction opposite the inlet, it will tend to flow in the electrolyte outlet conduit 19" by means of the respective outlet opening 19 interposed in fluid connection between the respective housing 17, 18 and the electrolyte outlet conduit 19".

In other words, therefore, the plastic gasket 14 has two opposite faces which, being abutted against the respective anode and cathode laminae 11, 12, form two respective hollow gaps 17 and 18 which are invaded by the water kept separate in the two zones, and in which the actual separation of the gaseous part from the aqueous part occurs, by means of an electrolysis process.

According to a preferred embodiment, the electrolytic cell 10 comprises a plurality of modules arranged in sequence with each other.

Advantageously, the system allows to have any number, not predetermined, of elements, being able to produce them for many types of use not only for endothermic engines, with the only limit of direct current supply for the separate gases solution.

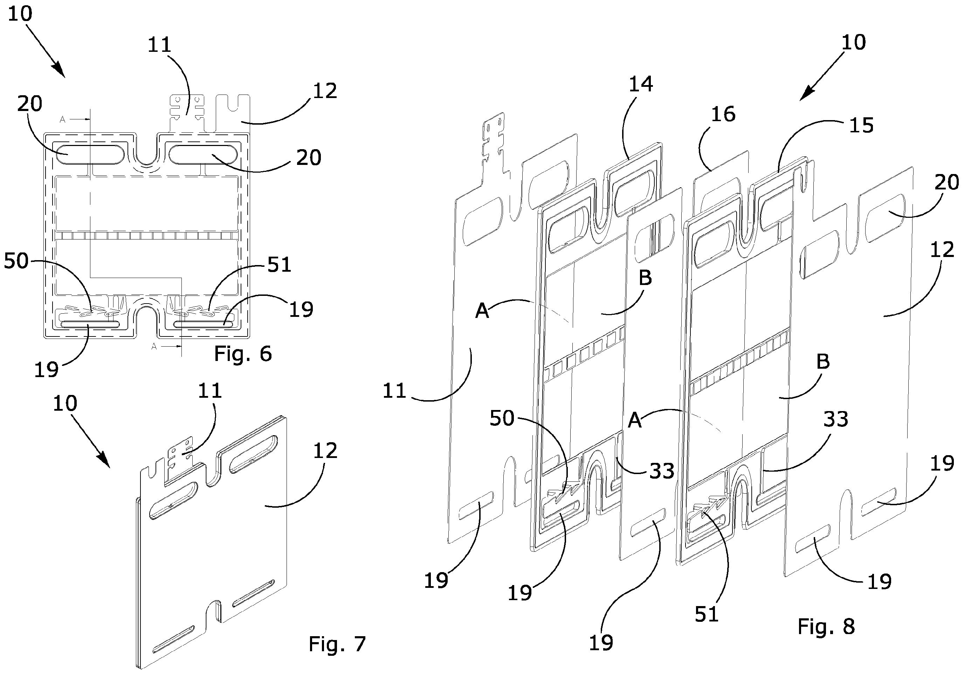

In particular, therefore, with particular reference to figures 5 and 8, the electrolytic cell 10 comprises a first lamina 11 made of electrically conductive material and adapted to act as an anode, a second lamina 12 made of electrically conductive material and adapted to act as a cathode, a plurality of third laminae 14 made of dielectric material and interposed between the first and second lamina 11, 12, and a plurality of fourth laminae 16 interposed between each pair of consecutive third laminae.

More precisely, each of the fourth laminae 16 is made of electrically conductive material adapted to electrically charge as a function of an induced potential difference between the first lamina 11 and the second lamina 12.

Thus, each fourth lamina 16 is advantageously capable of acting as anode or cathode as a function of the electrical potential to which the preceding and subsequent lamina is induced.

In other words, each pair of adjacent laminar plates forms an electrolytic cell when a voltage differential exists therebetween.

For example, if there is only one fourth lamina, it will act as a cathode if considered with reference to the first lamina 11 acting as an anode and, conversely, it will act as an anode if considered with reference to the second lamina 12 acting as a cathode.

According to the first embodiment of the invention, according to the preferred aspect illustrated in figures 3, 4 and 5, the electrolytic cell 10 comprises a plurality of pairs of laminar plates 11 and 12 coupled in series, of which the plates 11 are connected to an electrical source having respectively a positive pole, or anode, and the plates 12 to a negative pole or cathode, considering that this arrangement is only exemplary and that it can have indifferently inverted electrical polarity according to needs.

Said laminar plates 11 and 12 are made of metal material and have electrical conductivity, in order to be able to be connected to positive and negative poles of electric power sources.

Still according to said first embodiment, each pair of laminar plates 11 and 12 is separated by plastic gaskets 14, in turn separated by a metal gap 16 without electrical connections and made without sharp edges to avoid electrical dispersions.

In fact, this first solution includes that the H₂ and O₂ gases produced remain separate and consequently the plate 16 allows the water to rise while keeping the two zones of different polarity separate which flow towards separate and independent gas collection pipelines.

As can be seen in figure 5, each of the plastic gaskets 14 has respective windows 17 and 18 which represent hollow gaps 17' and 18' which are invaded by water, and in which the actual separation of the gaseous part from the aqueous part occurs, by means of an electrolysis process.

Each pair of laminar plates i.e., anode 11 and cathode 12 plate, as well as the gaskets 14 and metal plate 16, have lower openings 19 for the passage of water conduits 19', and upper openings 20 for the collection of H₂ and O₂ gases through further conduits 20'.

Preferably, at least the first embodiment of the electrolytic cell 10 comprises at least one plate 18' made of dielectric material, preferably nylon, and housable in the housing 17, 18 of the third lamina 14. Even more preferably, the plate 18' has a thickness not exceeding the depth of the housing 17, 18 in which it is inserted.

In accordance with the second embodiment of the invention illustrated in figures 2, 6, 7, 8, the third lamina 14 has at least a first housing 17 fashioned on the first surface A and at least a second housing 18 fashioned on the second surface B. In particular, each housing is made at the central portion 22.

Preferably, a first housing 17 is disposed in fluid connection with a respective first non-return valve 50, while a second housing 18 is disposed in fluid connection with a respective second non-return valve 51.

In particular, the second embodiment includes that the first housing 17 and the second housing 18 are communicating.

That is, the second embodiment of the invention includes the use of an electrolytic cell 10 for the production of H₂ and O₂ gases joined in the same housing.

Given the stoichiometric ratio 1:1 between the two gases produced and the working pressures, generally greater than 4 or 5 atmospheres, such gases do not trigger unintentional explosions as they are unstable. Furthermore, such produced gases are immediately conveyed into the combustion chamber of the associated engine along as short a path as possible outside the electrolytic cell 10.

Figures 2, 6, 7, 8 show this second embodiment of the electrolytic cell 10, in which a plurality of pairs of laminar metal plates 11 and 12 coupled in series, of which the plates 11 are connected to an electrical source having respectively a positive pole, or anode, and the plates 12 to the negative pole or cathode, considering that, also in this case, such an arrangement is only exemplary and that it can have indifferently inverted electrical polarity according to needs.

Said second embodiment is similar to the first, but from an operational point of view, it includes that the water enters a single gap 17 in which the H₂ and O₂ gases produced by electrolysis are formed, where these gases remain united to flow still united in the collection pipelines located above. Advantageously, once produced such gases will be delimited to lie on the respective surface of the electrolyte with opposite electric charge and will rise along such a surface until they are extracted from the electrolytic cell 10 to be made to flow into the combustion chamber of the associated engine.

In the case of combined gas production, i.e., the second embodiment described, the electrolytic cell 10 can be powered in variable frequency and electrical power.

A currently preferred embodiment of the electrolytic cell 10 is for a nominal 12 V DC vehicle electrical system. It employs at least one plate assembly with six or seven cells coupled in series, such that the voltage applied between adjacent plates, for a 12 Volt electrical system, is about 2 Volts. For a 24 Volt DC rated vehicle electrical system, at least one plate assembly is employed with from 12 to 14 cells, coupled in series. In any case, the optimal voltage range for the electrolysis of water in hydrogen and oxygen is between 1.5 and 2.0 V DC per electrolytic cell.

In general, the voltage values are defined by Faraday's Law, also considering a cell over-voltage (which must be reduced to a minimum) from 1.75 to 2.10 volts between one blade and the next.

Pulsed (non-alternating) or high frequency current, useful only with joined gases, allows to lower the over-voltage of the cell and obtain more gases with less current.

According to an embodiment, the non-return valve 50 is a Tesla valve.

Advantageously, the Tesla valve is shaped and configured to direct the flow of a liquid, in this case of the electrolyte.

More precisely, the Tesla valve allows the water passing through the lower conduits 19' to enter the two hollow gaps 17 and 18 of the plastic gasket 14, allowing the electrolytic separation of the water due to the proximity with the respective electrified plates represented, as mentioned, by the anode 11 and cathode 12.

The flow of the return water is made to flow from a special conduit 33 visible in figure 5 (first embodiment) and 8 (second embodiment), disposed on the opposite side of the gaskets 14 and 15 with respect to the area in which the Tesla valve is located, so as to allow the water to exit towards the return conduit 33 located in the lower area.

In operation, i.e., when the electrolytic cell 10 is compacted as shown in figure 4 or 7 and starting from the respective exploded view of figure 5 or 8, the water entering through the Tesla valve is pushed upwards entering the gaps 17' and 18' where the electrolytic reaction begins due to the proximity with the cathode 11 on one side and the anode 12 on the other, which determine its transformation into bubbles of hydrogen H₂ and oxygen O₂ which push upwards.

As depicted in figures 5 and 8, assuming that the anode 11 and the cathode 12 are compacted together by compressing the two gaskets 14 and 15 within them, divided by the separation plate 16, the transformation of the water into bubbles means that those rising from the gasket 14, which are closer to the anode 11, transform into oxygen O₂ and flow into one of the two conduits 20' predisposed to the oxygen collection sector, while the transformation of the water into bubbles rising from the gasket 15 close to the cathode 12 become hydrogen H₂ and flow towards the other conduit 20' predisposed to the hydrogen collection sector.

In other words, advantageously, the Tesla valve inhibits the mechanical return of water and gas bubbles produced by electrolysis, but allows the passage of electrons allowing the avoidance of the use of polymeric electrolytic membranes (PEM) whose cost is higher than simple plastic and whose advantages are controversial.

According to one aspect of the invention, the electrolytic cell 10 comprises a hermetically sealed box-like containment body (not shown) and in which each module defining the same electrolytic cell 10 is contained.

Preferably, the electrolytic cell 10 is sealed once all the components are assembled and this allows the whole to be filled with an electrolyte, thereby creating a fluid-tight system having both a gas outlet and the filling inlet. From the tests carried out, the seal at 8 bar was confirmed.

The water-gas ratio is 1800:1. As soon as a molecule of water is transformed into gas, the laws on gases come into play and therefore if the non-vented cell is pressurised, if the vent is a nozzle, by appropriately modulating the supply voltage the desired pressure balance is obtained.

With hydrogen gas it is not advisable to go beyond a few bars, as there is an explosion risk.

Further advantageous information concerning the invention is provided below.

The invention allows the assembly of the cells in automatic mode simply through the mechanical overlapping of a steel element and a plastic element, the latter always identical but placed in a mirrored manner with respect to the previous one.

With this system it is possible to create cells of arbitrary size and with an arbitrary number of poles as a function of the power supply to be considered or the contact system to be provided

Only blades (the metal part) and plastic gaps are assembled in a proprietary mode which makes the cell self-supporting with a water path optimised by the introduction of a Tesla valve for each blade aimed at limiting the descent of the electrolyte in case of increased pressure.

Thus it is possible to count on all the advantages of continuous supply cells of the solution with all the advantages of isolated cells, without the construction complexity of the latter.

The system allows to have any number of elements, being able to produce them for many types of use, thus the variants are practically infinite.

The system allows the supply both in direct current (separate gases) or with pulsed waves in frequency since it can be calibrated for resonance operation.

## Claims

1. An electrolytic cell for the electrolysis of an electrolyte, preferably water, comprising in turn:
- a first lamina (11) made of electrically conductive material adapted to act as an anode;
- a second lamina (12) made of electrically conductive material adapted to act as a cathode;
- a third lamina (14) made of dielectric material interposed between said first (11) and second (12) laminae and configured to convey a flow of electrolyte from a lower portion (21) to an upper portion (23) of said third lamina (14); said third lamina having a first surface (A) facing towards said first lamina and a second surface (B) facing towards said second lamina;
wherein said third lamina is disposed in fluid connection with at least one inlet conduit (19') for an electrolyte disposed at said lower portion (21), at least one outlet conduit (19") for an electrolyte disposed at said lower portion, and at least one conduit (20', 20") for extracting a gas obtained by electrolysis disposed at said upper portion,
**characterised in that** it comprises at least one non-return valve (50, 51) disposed at said lower portion (21) of said third lamina along said inlet conduit (19') configured to convey the flow of electrolyte unidirectionally along said inlet conduit towards a central portion (22) of said third lamina comprised between said lower portion and said upper portion (23); said inlet conduit (19') for an electrolyte, said outlet conduit (19") for an electrolyte and said central portion (22) of said third lamina (14) defining a flow path.

2. The electrolytic cell according to claim 1, **characterised in that** said non-return valve (50, 51) is a Tesla valve.

3. The electrolytic cell according to claim 1 or 2, **characterised in that** said first lamina and said second lamina (11, 12) are made of an electrically conductive metal material, preferably stainless steel, in order to be able to be connected to positive and negative poles of electric power sources.

4. The electrolytic cell according to any preceding claim, **characterised in that** said third lamina (14) is a plate of predefined dimensions made of a polymeric material, preferably nylon.

5. The electrolytic cell according to any preceding claim, **characterised in that** said third lamina (14) has at least one housing (17') fashioned on said first surface and/or (18') on said second surface at said central portion (22).

6. The electrolytic cell according to claim 5, **characterised in that** said at least one non-return valve (50) is fashioned on said first surface (A) and/or on said second surface (B) at the bottom and in fluid connection with said housing.

7. The electrolytic cell according to claim 5 or 6, **characterised in that** said third lamina (14) has at least a first housing (17') fashioned on said first surface (A) and at least a second housing (18') fashioned on said second surface (B), each at said central portion.

8. The electrolytic cell according to claim 7, **characterised in that** said at least a first housing (17') is disposed in fluid connection with a respective first non-return valve (50) and said at least a second housing (18') is disposed in fluid connection with a respective second non-return valve (51).

9. The electrolytic cell according to claim 7 or 8, **characterised in that** said first housing (17') and said second housing (18') are communicating.

10. The electrolytic cell according to claim 7 or 8, **characterised in that** said first housing (17') and said second housing (18') are separated by a space created with a dielectric material.

11. The electrolytic cell according to any preceding claim 5 to 10, **characterised in that** it comprises at least one plate made of dielectric material (16) which may be housed in said housing (17') of said third lamina (14).

12. The electrolytic cell according to any preceding claim, **characterised in that** said flow path is devoid of corners and/or acute angles.

13. The electrolytic cell according to any preceding claim, **characterised in that** it comprises a hermetically sealed box-like body for containing said module.

14. The electrolytic cell according to any preceding claim, **characterised in that** it comprises a plurality of said modules arranged in sequence; said electrolytic cell comprising:
- a first lamina (11) made of electrically conductive material adapted to act as an anode;
- a second lamina (12) made of electrically conductive material adapted to act as a cathode;
- a plurality of third laminae (14) made of dielectric material and interposed between said first (11) and second (12) laminae:
- at least a fourth lamina (16) interposed between each pair of third consecutive laminae (14);
each fourth lamina (16) being made of electrically conductive material adapted to be electrostatically charged according to a potential difference induced between said first lamina (11) and said second lamina (12).

## Patentansprüche

1. Elektrolytische Zelle für die Elektrolyse eines Elektrolyten, vorzugsweise Wasser, die wiederum Folgendes umfasst:
- eine erste Schicht (11) bestehend aus elektrisch leitfähigem Material, die ausgebildet ist, um als Anode zu fungieren;
- eine zweite Schicht (12) bestehend aus elektrisch leitfähigem Material, die ausgebildet ist, um als Kathode zu fungieren;
- eine dritte Schicht (14) bestehend aus dielektrischem Material, die zwischen der ersten (11) und der zweiten (12) Schicht angeordnet und dazu ausgelegt ist, einen Elektrolytstrom von einem unteren Abschnitt (21) zu einem oberen Abschnitt (23) der dritten Schicht (14) zu befördern; wobei die dritte Schicht eine erste Oberfläche (A), die der ersten Schicht zugewandt ist, und eine zweite Oberfläche (B), die der zweiten Schicht zugewandt ist, aufweist;
wobei die dritte Schicht in Fluidverbindung mit mindestens einer Einlassleitung (19') für einen Elektrolyten, die an dem unteren Abschnitt (21) angeordnet ist, mindestens einer Auslassleitung (19") für einen Elektrolyten, die an dem unteren Abschnitt angeordnet ist, und mindestens einer Leitung (20', 20") zum Extrahieren eines durch Elektrolyse erhaltenen Gases, die an dem oberen Abschnitt angeordnet ist, angeordnet ist, **dadurch gekennzeichnet, dass** es mindestens ein Rückschlagventil (50, 51) umfasst, das an dem unteren Abschnitt (21) der dritten Schicht entlang der Einlassleitung (19') angeordnet ist, das ausgelegt ist, um den Elektrolytstrom unidirektional entlang der Einlassleitung zu einem zentralen Abschnitt (22) der dritten Schicht zu befördern, das zwischen dem unteren Abschnitt und dem oberen Abschnitt (23) enthalten ist; wobei die Einlassleitung (19') für einen Elektrolyten, die Auslassleitung (19") für einen Elektrolyten und der zentrale Abschnitt (22) der dritten Schicht (14) einen Strömungsweg definieren.

2. Elektrolytische Zelle nach Anspruch 1, **dadurch gekennzeichnet, dass** das Rückschlagventil (50, 51) ein Tesla-Ventil ist.

3. Elektrolytische Zelle nach Anspruch 1 oder 2, **dadurch gekennzeichnet, dass** die erste Schicht und die zweite Schicht (11, 12) aus einem elektrisch leitfähigen Metallmaterial, vorzugsweise rostfreiem Stahl, bestehen, um mit positiven und negativen Polen elektrischer Stromquellen verbunden werden zu können.

4. Elektrolytische Zelle nach einem der vorhergehenden Ansprüche, **dadurch gekennzeichnet, dass** die dritte Schicht (14) eine Platte mit vordefinierten Abmessungen ist, die aus einem Polymermaterial, vorzugsweise Nylon, besteht ist.

5. Elektrolytische Zelle nach einem der vorhergehenden Ansprüche, **dadurch gekennzeichnet, dass** die dritte Schicht (14) mindestens ein Gehäuse (17') aufweist, das an der ersten Oberfläche und/oder (18') an der zweiten Oberfläche an dem zentralen Abschnitt (22) ausgestaltet ist.

6. Elektrolytische Zelle nach Anspruch 5, **dadurch gekennzeichnet, dass** das mindestens eine Rückschlagventil (50) bodenseitig und in Fluidverbindung mit dem Gehäuse an der ersten Oberfläche (A) und/oder an der zweiten Oberfläche (B) ausgestaltet ist.

7. Elektrolytische Zelle nach Anspruch 5 oder 6, **dadurch gekennzeichnet, dass** die dritte Schicht (14) mindestens ein erstes Gehäuse (17'), das an der ersten Oberfläche (A) ausgestaltet ist, und mindestens ein zweites Gehäuse (18'), das an der zweiten Oberfläche (B) ausgestaltet ist, jeweils an dem zentralen Abschnitt aufweist.

8. Elektrolytische Zelle nach Anspruch 7, **dadurch gekennzeichnet, dass** das zumindest eine erste Gehäuse (17') in Fluidverbindung mit einem jeweiligen ersten Rückschlagventil (50) und das zumindest eine zweite Gehäuse (18') in Fluidverbindung mit einem jeweiligen zweiten Rückschlagventil (51) angeordnet ist.

9. Elektrolytische Zelle nach Anspruch 7 oder 8, **dadurch gekennzeichnet, dass** das erste Gehäuse (17') und das zweite Gehäuse (18') kommunizieren.

10. Elektrolytische Zelle nach Anspruch 7 oder 8, **dadurch gekennzeichnet, dass** das erste Gehäuse (17') und das zweite Gehäuse (18') durch einen mit einem dielektrischen Material hergestellten Raum getrennt sind.

11. Elektrolytische Zelle nach einem der vorhergehenden Ansprüche 5 bis 10, **dadurch gekennzeichnet, dass** sie mindestens eine Platte bestehend aus dielektrischem Material (16) umfasst, die in dem Gehäuse (17') der dritten Schicht (14) untergebracht werden kann.

12. Elektrolytische Zelle nach einem der vorhergehenden Ansprüche, **dadurch gekennzeichnet, dass** der Strömungsweg frei von Ecken und/oder spitzen Winkeln ist.

13. Elektrolytische Zelle nach einem der vorhergehenden Ansprüche, **dadurch gekennzeichnet, dass** sie einen hermetisch abgedichteten kastenartigen Körper zum Enthalten des Moduls umfasst.

14. Elektrolytische Zelle nach einem der vorhergehenden Ansprüche, **dadurch gekennzeichnet, dass** sie eine Vielzahl von Modulen umfasst, die in Folge angeordnet sind; wobei die elektrolytische Zelle umfasst:
- eine erste Schicht (11) bestehend aus elektrisch leitfähigem Material, die ausgebildet ist, um als Anode zu fungieren;
- eine zweite Schicht (12) bestehend aus elektrisch leitfähigem Material, die ausgebildet ist, um als Kathode zu fungieren;
- eine Vielzahl von dritten Schichten (14), die aus dielektrischem Material besteht und zwischen den ersten (11) und zweiten (12) Schichten angeordnet sind;
- mindestens eine vierte Schicht (16), die zwischen einem jeden Paar dritter aufeinanderfolgender Schichten (14) angeordnet ist;
wobei eine jede vierte Schicht (16) aus elektrisch leitfähigem Material besteht, die ausgebildet ist, um entsprechend einer zwischen der ersten Schicht (11) und der zweiten Schicht (12) induzierten Potentialdifferenz elektrostatisch aufgeladen zu werden.

## Revendications

1. Cellule électrolytique pour l'électrolyse d'un électrolyte, de préférence de l'eau, comprenant à son tour :
- une première lame (11) en matériau électriquement conducteur, adaptée pour agir comme une anode ;
- une deuxième lame (12) en matériau électriquement conducteur adaptée pour agir comme une cathode ;
- une troisième lame (14) en matériau diélectrique interposée entre lesdites première (11) et deuxième (12) lames et configurée pour acheminer un flux d'électrolyte d'une partie inférieure (21) à une partie supérieure (23) de ladite troisième lame (14) ; ladite troisième lame comportant une première surface (A) orientée vers ladite première lame et une deuxième surface (B) orientée vers ladite deuxième lame ;
dans laquelle ladite troisième lame est disposée en raccordement fluidique avec au moins un conduit d'entrée (19') pour un électrolyte disposé dans ladite partie inférieure (21), au moins un conduit de sortie (19") pour un électrolyte disposé dans ladite partie inférieure, et au moins un conduit (20', 20") pour extraire un gaz obtenu par électrolyse disposé dans ladite partie supérieure, **caractérisé en ce qu'**elle comprend au moins un clapet antiretour (50, 51) disposé en correspondance de ladite partie inférieure (21) de ladite troisième lame le long dudit conduit d'entrée (19') configuré pour acheminer le flux d'électrolyte de manière unidirectionnelle le long dudit conduit d'entrée vers une partie centrale (22) de ladite troisième lame comprise entre ladite partie inférieure et ladite partie supérieure (23) ; ledit conduit d'entrée (19') pour un électrolyte, ledit conduit de sortie (19") pour un électrolyte et ladite partie centrale (22) de ladite troisième lame (14) définissant une trajectoire d'écoulement.

2. Cellule électrolytique selon la revendication 1, **caractérisée en ce que** ledit clapet antiretour (50, 51) est un clapet Tesla.

3. Cellule électrolytique selon la revendication 1 ou 2, **caractérisée en ce que** ladite première lame et ladite deuxième lame (11, 12) sont constituées d'un matériau métallique électriquement conducteur, de préférence en acier inoxydable, afin de pouvoir être branchées aux pôles positif et négatif de sources d'énergie électrique.

4. Cellule électrolytique selon l'une quelconque des revendications précédentes, **caractérisée en ce que** ladite troisième lame (14) est une plaque de dimensions prédéfinies en matériau polymère, de préférence en nylon.

5. Cellule électrolytique selon l'une quelconque des revendications précédentes, **caractérisée en ce que** ladite troisième lame (14) comporte au moins un logement (17') façonné sur ladite première surface et/ou (18') sur ladite deuxième surface en correspondance de ladite partie centrale (22).

6. Cellule électrolytique selon la revendication 5, **caractérisée en ce que** ledit au moins un clapet antiretour (50) est façonné sur ladite première surface (A) et/ou sur ladite deuxième surface (B) au fond et en raccordement fluidique avec ledit logement.

7. Cellule électrolytique selon la revendication 5 ou 6, **caractérisée en ce que** ladite troisième lame (14) comporte au moins un premier logement (17') façonné sur ladite première surface (A) et au moins un deuxième logement (18') façonné sur ladite deuxième surface (B), chacune en correspondance de ladite partie centrale.

8. Cellule électrolytique selon la revendication 7, **caractérisée en ce que** ledit au moins un premier logement (17') est disposé en raccordement fluidique avec un premier clapet antiretour (50) respectif et ledit au moins un deuxième logement (18') est disposé en raccordement fluidique avec un deuxième clapet antiretour (51) respectif.

9. Cellule électrolytique selon la revendication 7 ou 8, **caractérisée en ce que** ledit premier logement (17') et ledit deuxième logement (18') sont communicants.

10. Cellule électrolytique selon la revendication 7 ou 8, **caractérisée en ce que** ledit premier logement (17') et ledit deuxième logement (18') sont séparés par un espace créé avec un matériau diélectrique.

11. Cellule électrolytique selon l'une quelconque des revendications précédentes 5 à 10, **caractérisée en ce qu'**elle comprend au moins une plaque en matériau diélectrique (16) qui peut être logée dans ledit logement (17') de ladite troisième lame (14).

12. Cellule électrolytique selon l'une quelconque des revendications précédentes, **caractérisée en ce que** ladite trajectoire d'écoulement est dépourvue de coins et/ou d'angles aigus.

13. Cellule électrolytique selon l'une quelconque des revendications précédentes, **caractérisée en ce qu'**elle comprend un corps en forme de boîte hermétiquement étanche pour contenir ledit module.

14. Cellule électrolytique selon l'une quelconque des revendications précédentes, **caractérisée en ce qu'**elle comprend une pluralité desdits modules disposés en séquence ; ladite cellule électrolytique comprenant :
- une première lame (11) en matériau électriquement conducteur, adaptée pour agir comme une anode ;
- une deuxième lame (12) en matériau électriquement conducteur adaptée pour agir comme une cathode ;
- une pluralité de troisièmes lames (14) en matériau diélectrique, interposées entre lesdites première (11) et deuxième (12) lames :
- au moins une quatrième lame (16) interposée entre chaque paire de troisièmes lames (14) consécutives ; chaque quatrième lame (16) étant constituée d'un matériau électriquement conducteur adapté pour être chargé électrostatiquement selon une différence de potentiel induite entre ladite première lame (11) et ladite deuxième lame (12).
